# EUROPÄISCHE PATENTSCHRIFT

(11) **EP 4 026 601 B1**
(45) Veröffentlichungstag und Bekanntmachung des Hinweises auf die Patenterteilung: **26.07.2023**
(21) Anmeldenummer: 21214489.3
(22) Anmeldetag: 14.12.2021
(51) Int. Cl.: B01D 46/00, B01D 46/24

(54) **FILTEREINSATZ ZUM EINBAU IN EINEN FLÜSSIGKEITSABSCHEIDER, FLÜSSIGEITSABSCHEIDER, VERFAHREN ZUM BEREITSTELLEN DES VORGENANNTEN FILTEREINSATZES SOWIE VERWENDUNG DES FILTEREINSATZES IN EINEM FLÜSSIGKEITSABSCHEIDER**
LIQUID SEPARATOR, FILTER INSERT FOR INSTALLATION IN A LIQUID SEPARATOR, METHOD FOR PROVIDING SAID FILTER INSERT AND USE OF THE FILTER INSERT IN A LIQUID SEPARATOR
INSERT FILTRANT DESTINÉ À ÊTRE INSTALLÉ DANS UN SÉPARATEUR DE LIQUIDE, SÉPARATEUR DE LIQUIDE, PROCÉDÉ DE PRÉPARATION DUDIT INSERT FILTRANT, AINSI QU'UTILISATION DE L'INSERT FILTRANT DANS UN SÉPARATEUR DE LIQUIDE

(30) Priorität: 12.01.2021 DE 102021100413
(43) Veröffentlichungstag der Anmeldung: 13.07.2022
(73) Patentinhaber: MANN+HUMMEL GmbH, 71636 Ludwigsburg (DE)
(72) Erfinder: BANGALORE PANNEERSELVAM, Mohan, 67346 Speyer (DE); DWORATZEK, Klemens, 68535 Edingen (DE); SAVADATTI, Pramod, 580001 Dharwad (IN); THONTARADHYA, Srinivasa, 560090 Bengaluru (IN)
(74) Vertreter: Mann + Hummel Intellectual Property

(56) Entgegenhaltungen:
- WO-A1-2005/068051
- WO-A1-2013/024105
- CN-U- 201 470 260
- JP-A- 2015 105 606

## Beschreibung

### Technisches Gebiet

Die Erfindung betrifft einen Filtereinsatz nach dem Oberbegriff des Anspruchs 1, einen Flüssigkeitsabscheider nach dem Oberbegriff des Anspruchs 8 und ein Verfahren zum Bereitstellen eines Filtereinsatzes nach dem Oberbegriff des Anspruchs 1 zum Einbau in einen Flüssigkeitsabscheider nach dem Oberbegriff des Anspruchs 8.

### Stand der Technik

Flüssigkeitsabscheider, beispielsweise Luftentölelemente zum Abscheiden von Ölaerosol aus Luft, können zum Beispiel zur Entölung von Druckluft in Druckluftsystemen verwendet werden, die durch ein ölgeschmiertes Anschlusselement, beispielsweise einen Kompressor oder eine Vakuumpumpe, gespeist werden. Ein derartiger Flüssigkeitsabscheider weist einen zum Abscheiden von Öl aus Luft ausgebildeten Filtereinsatz und einen druckfesten Behälter des Anschlusselements auf.

Die mit Öl beladene Luft strömt über einen Rohlufteinlass in den druckfesten Behälter ein, um anschließend den Filtereinsatz, der mindestens ein zum Abscheiden von Öl aus Rohluft ausgebildetes Filterelement oder Abscheideelement, beispielsweise einen Hauptabscheider und einen Nachabscheider, aufweist, zu durchströmen und schließlich im gereinigten Zustand das Gehäuse über den Reinluftauslass zu verlassen.

Der Filtereinsatz funktioniert nach dem Koaleszenz-Prinzip. Das mindestens eine hohlzylindrisch ausgebildete Filterelement ist als hohlzylinderförmiger Koaleszer ausgebildet, der die feinen Öltröpfchen zu größeren, sich durch Schwerkraft im Luftentölelement und stromab davon nach unten absetzenden Öltropfen zusammenballt. Die sich absetzenden Öltropfen werden über mindestens eine Drainageleitung oder mindestens ein Drainagerohr abdrainiert.

Aus der Druckschrift DE 10 2014 002719 A1 ist ein Filtereinsatz nach dem Oberbegriff des Anspruchs 1 bekannt. Bei diesem Filtereinsatz ist der Flansch im Längsschnitt treppenartig geformt und weist zwei treppenartige Stufen auf. Die radial äußere treppenartige Stufen liegt mit ihren beiden, rechtwinklig zueinander angeordneten Flächen direkt an dem zylindrischen Gehäusekörper an, wodurch der Filtereinsatz zentriert im Gehäusekörper angeordnet ist. Die radial innere treppenartige Stufe deckt das Abscheideelement ab. Ein weiterer gattungsgemässer Filtereinsatz ist in der CN201470260U offenbart.

In vorgeschriebenen Wartungsinterwallen ist das Abscheideelement auszutauschen. Dabei variiert die Länge der Wartungsintervalle je nach Auslegung des Abscheideelements bzw. je nach Auslegung des Flüssigkeitsabscheiders.

Der Erfindung liegt die Aufgabe zugrunde, einen Filtereinsatz der eingangs genannten Art sowie einen Flüssigkeitsabscheider der eingangs genannten Art so weiterzubilden, dass der Filtereinsatz besonders einfach und fehlerfrei in das Gehäuse des Flüssigkeitsabscheiders einbaubar ist. Insbesondere soll differenzierbar sein, ob der Filtereinsatz zum Einbau in den Flüssigkeitsabscheider ausgelegt ist. Beispielsweise soll sichergestellt werden, dass der Filtereinsatz nur in einem zu diesem passenden Flüssigkeitsabscheider in Betrieb genommen werden kann.

### Offenbarung der Erfindung

Diese Aufgabe wird durch einen Filtereinsatz mit den im Anspruch 1 angegebenen Merkmalen sowie durch einen Flüssigkeitsabscheider mit den im Anspruch 8 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Die vorliegende Erfindung basiert darauf, dass der Flansch des Filtereinsatzes mindestens eine Führungsstruktur aufweist, in welche mindestens eine komplementär zur Führungsstruktur ausgebildete Gegenstruktur des Flüssigkeitsabscheiders eingreifen kann. Führungsstruktur und Gegenstruktur sind dabei nach Art eines Schlüssel-Schloss-Prinzipes ausgebildet. Die Führungsstruktur des Flansches ist eine von der Stirnseite des Abscheideelementes weg ragende nutartige axiale Erhebung des Flansches. Diese Form der Führungsstruktur bewirkt, dass die Stützfläche des Flansches nur dann auf dem Abstützbereich des Gehäuses anordbar ist, wenn die Führungsstruktur und die Gegenstruktur räumlich passend zueinander angeordnet sind, insbesondere wenn die Gegenstruktur in die Führungsstruktur eingreift. Auf diese Weise kann sichergestellt werden, dass nur ein passender Filtereinsatz an einem spezifischen Flüssigkeitsabscheider zum Einsatz kommt.

Bei der vorliegenden Erfindung ist aufgrund der Form der Führungsstruktur der Gehäusedeckel nur dann schließend auf dem Gehäusekörper anordbar, wenn die Führungsstruktur und die Gegenstruktur räumlich passend zueinander angeordnet sind. Die Gehäuseöffnung kann also nicht mit dem Gehäusedeckel verschlossen werden, wenn der Flansch zwischen dem Gehäusedeckel und dem Gehäusekörper angeordnet ist und dabei die Führungsstruktur und die Gegenstruktur nicht räumlich passend zueinander angeordnet sind, weil dann die Gegenstruktur die Stützfläche des Flansches auf Abstand zur Auflagefläche des Gehäusekörpers hält.

Um ein Ansammeln von Kondenswasser in der Führungsstruktur zuverlässig zu verhindern, ist diese vorteilhafterweise in Gebrauchsstellung des Flansches zum Abstützbereich hin offen ausgebildet.

Bei einem besonders vorteilhaften Ausführunsgbeispiel der vorliegenden Erfindung ist die Führungsstruktur eine konzentrisch um eine zentrale Ausnehmung des Abscheideelements angeordnete ringförmige Erhebung des Flansches. Dies hat den Vorteil, dass die Führungsstruktur dazu ausgelegt ist, beim Einsatz des Filtereinsatzes in das Gehäuse des Flüssigkeitsabscheiders das Abscheideelement zu zentrieren. Dabei kann die zentrale Ausnehmung des Abscheideelements als Ausströmöffnung ausgebildet sein. Der radial innere Rand des Flansches kann dazu ausgebildet sein, die Ausströmöffnung des Filterelementes zu begrenzen. Beispielsweise kann der Flansch aus einem Metallblech gebildet sein, das eine zentrale Ausnehmung aufweist und dessen an die Ausnehmung angrenzender innerer Rand umgebördelt ist.

Die in der Führungsstruktur anordbare Gegenstruktur des Flüssigkeitsabscheiders kann konzentrisch am zylinderförmigen Gehäusekörper angeordnet sein. Dies bewirkt, dass mittels eines räumlich zueinander passenden Anordnens der Führungsstruktur und der Gegenstruktur, das Abscheideelement zentriert im Gehäuse anordbar ist bzw. koaxial zum zylinderförmigen Gehäusekörper anordbar ist.

Bei einem Flüssigkeitsabscheider, bei dem die mit Öl beladene Luft einen zwischen Gehäusekörper und Filterelement angeordneten Ringspalt spiralartig durchströmt, bevor diese in das Abscheideelement eintritt, wird der Fachmann es besonders zu schätzen wissen, wenn die Führungsstruktur hilft das Abscheideelement im Gehäusekörper zu zentrieren, denn bei einem derartigen Flüssigkeitsabscheider ist ein Zentrieren des Abscheideelements notwendig, damit das Abscheideelement gleichmäßig von dem Gasstrom angeströmt wird.

Bei einem besonders vorteilhaften Ausführungsbeispiel der vorliegenden Erfindung ist also
- die Stützfläche des Flansches derart radial versetzt zum Abscheideelement angeordnet, dass das Abscheideelement mit Abstand zum zylindrischen Gehäusekörper anordbar ist, wobei zwischen dem zylinderförmigen Gehäusekörper und dem hohlzylinderförmigen Abscheideelement ein Ringspalt ausgebildet ist, der von der den Gehäusekörper durchströmenden mit Flüssigkeit beladenen Luft spiralartig durchströmbar ist,
- die Führungsstruktur eine konzentrisch um eine zentrale Ausnehmung des Abscheideelements angeordnete ringförmige nutartige Erhebung des Flansches und
- die Gegenstruktur eine konzentrisch am zylinderförmigen Gehäusekörper des Flüssigkeitsabscheiders angeordnete gegennutartige Erhebung des Gehäusekörpers und/oder eine konzentrisch ausgebildete, gegennutartige Erhebung eines im Gehäusekörper angeordneten Luftleitelementes.

Bei einem vorteilhaften Ausführungsbeispiel der vorliegenden Erfindung ist die Führungsstruktur derart geformt, dass sie die Stützfläche des Flansches in axialer Richtung überragt. Beispielsweise kann die Führungsstruktur alle anderen Bereiche des Flansches in axialer Richtung überragen. Die Führungsstruktur kann also ein Bereich des Flansches sein, der den weitesten axialen Abstand zum Abscheideelement aufweist. So kann auch im Gehäusedeckel eine mit der Führungsstruktur zusammenwirkende Gegenstruktur angeordnet sein. Auf diese Weise ist mittels der Führungsstruktur neben der Position des Flansches zum Gehäusekörper auch die Position des Flansches zum Gehäusedeckel festlegbar.

Unabhängig hiervon oder in Verbindung hiermit ist bei einem vorteilhaften Ausführungsbeispiel der vorliegenden Erfindung an der Stützfläche des Flansches mindestens ein Dichtelement verliersicher angeordnet. Dabei ist das Dichtelement derart an der Stützfläche angeordnet, dass es in Gebrauchsstellung des Filtereinsatzes zwischen dem Flansch und dem Gehäuse des Flüssigkeitsabscheiders angeordnet ist und das Gehäuse gegenüber dem Umgebungsdruck abdichtet. Das Vorsehen eines Dichtelementes an der Stützfläche des Flansches hat bei der vorliegenden Erfindung den Vorteil, dass beim Einsetzen des Flansches in den Flüssigkeitsabscheider mittels eines räumlich zueinander passenden Anordnens der Führungsstruktur des Flansches und der Gegenstruktur des Flüssigkeitsabscheiders die Position das Dichtelementes in seiner korrekten Dichtungsposition anordbar ist. Die Führungsstruktur hilft also beim Einsetzen des Filtereisatzes in den Flüssigkeitsabscheider das Dichtelement in seine korrekte Dichtungsposition zu führen. Indem die Führungsstruktur ein falsches Einsetzen des Dichtelementes verhindert, erhöht sie die Betriebssicherheit des Flüssigkeitsabscheiders.

Das Dichtelement kann beispielsweise eine Flachdichtung, ein O-Ring oder ein L-förmiger Dichtungsring sein. Insbesondere kann die Dichtung im Längsschnitt L-förmig ausgebildet sein und am radial äußeren Rand des Flansches angeordnet sein.

Vorteilhafterweise ist das Dichtelement ein fester Bestandteil des Filtereinsatzes, insbesondere verliersicher am Filtereinsatz angeordnet. Dies ermöglicht eine Arbeitsschritterleichterung beim Austausch des Filtereinsatzes, weil dadurch kein separater Dichtungswechsel erforderlich ist.

Bei einem vorteilhaften Ausführungsbeispiel des Flüssigkeitsabscheiders gemäß der vorliegenden Erfindung ist
- die Stützfläche des Flansches im geschlossenen Zustand des Gehäuses zwischen dem Gehäusedeckel und dem Gehäusekörper verspannt,
- mindestens eine zur Aufnahme der Stützfläche ausgebildete Flanschausnehmung am Gehäuse angeordnet, und
- der Radius des Flansches derart geringer als der Radius des Gehäuses, dass an einem an die Flanschausnehmung angrenzenden radial äußerem Bereich des Gehäuses im geschlossenen Zustand des Gehäuses der Gehäusedeckel direkt auf dem Gehäusekörper aufliegt.

Der Flüssigkeitsabscheider weist vorteilhafterweise einen tangential am zylinderförmigen Gehäusekörper angeordneten Rohlufteinlass auf, der mit einem flüssigkeitsgeschmierten Anschlusselement eines Druckluftsystems, insbesondere mit einem ölgeschmierten Kompressor, verbindbar ist und dazu ausgebildet ist, von dem Anschlusselement stammende und mit Flüssigkeit beladene Druckluft tangential in den zylinderförmigen Gehäusekörper einzulassen.

Des Weiteren weist der Flüssigkeitsabscheider vorteilhafterweise einen zwischen dem zylinderförmigen Gehäusekörper und dem Abscheideelement des Filtereinsatzes angeordneten Ringspalt auf. Dabei ist der Flüssigkeitsabscheider derart ausgebildet, dass die durch den Rohlufteinlass einströmende Luft den Ringspalt spiralartig durchströmt und an einem dem Deckel abgewandten Bereich in das Abscheideelement des Filtereinsatzes einströmt.

Die Gegenstruktur des Flüssigkeitsabscheiders sowie der Abstützbereich des Gehäusekörpers können an einem in Gebrauchsstellung dem Flansch zugewandten Bereich des zylinderförmigen Gehäusekörpers angeordnet sein. Dies hat den Vorteil, dass die Führungsstruktur und die Gegenstruktur beim Einsetzen des Filtereinsatzes in den Flüssigkeitsabscheider derart zusammenwirken, dass der Abstand des Abscheideelements zum Gehäusekörper festgelegt wird, insbesondere das Abscheideelement im Gehäusekörper zentriert wird.

Optional kann zwischen dem Gehäusekörper und dem Abscheideelement mindestens ein zum Leiten der den Gehäusekörper durchströmenden Luft ausgebildetes Luftleitelement, insbesondere Luftleitblech, angeordnet sein. Das Luftleitelement ist somit im zylinderförmigen Gehäusekörper im Strömungsweg der mit Flüssigkeit beladenen Luft vor dem Abscheideelement angeordnet.

Das Luftleitelement kann ein vom Gehäusekörper unabhängiges Element sein. Beim Einsetzen des Luftleitelement in den Gehäusekörper ist es wichtig dieses gut zu zentrieren, denn
- der Abstand zwischen dem Gehäusekörper und dem Luftleitelement definiert den Vorabscheidegrad des Flüssigkeitsabscheiders und
- der Abstand zwischen dem Luftleitelement und dem Abscheideelement definiert die Geschwindigkeit, mit welcher die mit Flüssigkeit beladene Luft in das Abscheideelement einströmt.

Es ist also erforderlich das Luftleitelement im Gehäusekörper gut zu zentrieren, damit der gewünschte Vorabscheidegrad erreicht wird und das Abscheideelement gleichmäßig angeströmt wird.

Ergänzend oder alternativ zum Gehäusekörper kann die Gegenstruktur des Flüssigkeitsabscheiders an einem in Gebrauchsstellung dem Flansch zugewandten Bereich des Luftleitelements angeordnet sein. Bei diesem Ausführungsbeispiel ist die Führungsstruktur des Flansches auf der Gegenstruktur des Luftleitelements angeordnet und die Gegenstruktur des Luftleitelements auf dem Abstützbereich des Gehäusekörpers angeordnet. Ein Anordnen der Gegenstruktur am Luftleitelement hat den Vorteil, dass die Führungsstruktur und die Gegenstruktur beim Einsetzen des Filtereinsatzes in den Flüssigkeitsabscheider derart zusammenwirken, dass der Abstand des Luftleitelements zum Abscheideelement festgelegt wird. Es kann somit keine Fehlpositionierung vom Abscheideelement zum Luftleitelement auftreten.

Die vorliegende Erfindung betrifft des Weiteren ein Verfahren zum Bereitstellen eines Filtereinsatzes der vorstehend dargelegten Art, zum Einbau in einen Flüssigkeitsabscheider der vorstehend dargelegten Art.

Die vorliegende Erfindung betrifft schließlich die Verwendung eines Filtereinsatzes der vorstehend dargelegten Art in einem Flüssigkeitsabscheider der vorstehend dargelegten Art, zur Entölung von Druckluft, wobei der Flüssigkeitsabscheider einem Druckluftsystem zugeordnet ist, das durch ein ölgeschmiertes Anschlusselement, beispielsweise durch einen Kompressor oder durch eine Vakuumpumpe, gespeist wird.

### Kurze Beschreibung der Zeichnungen

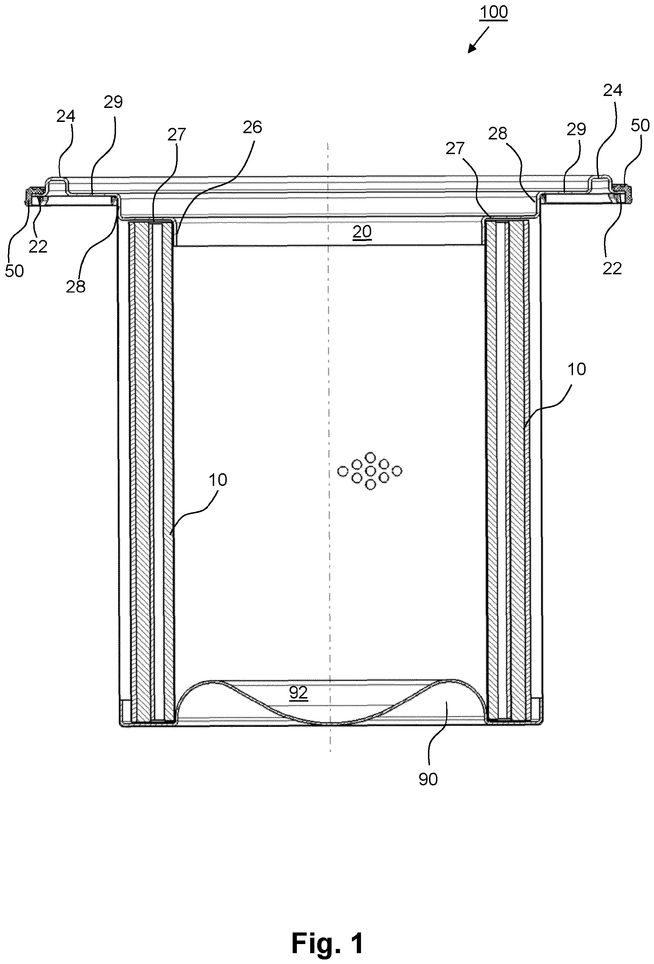

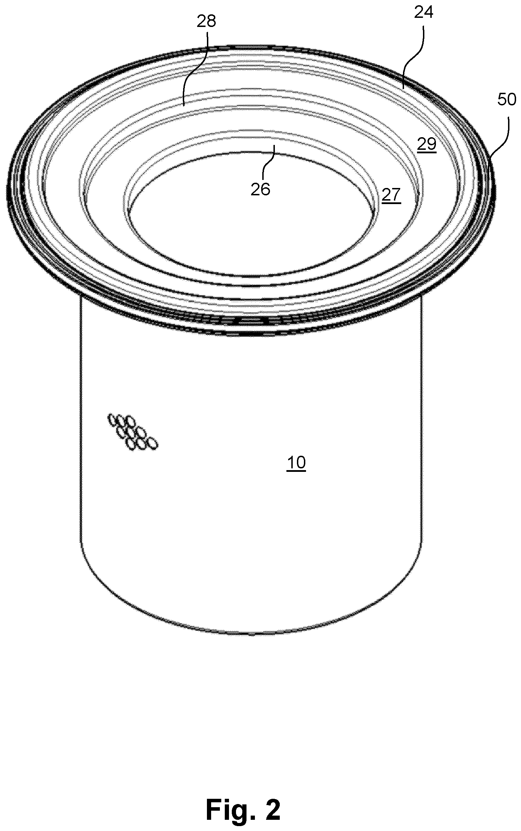

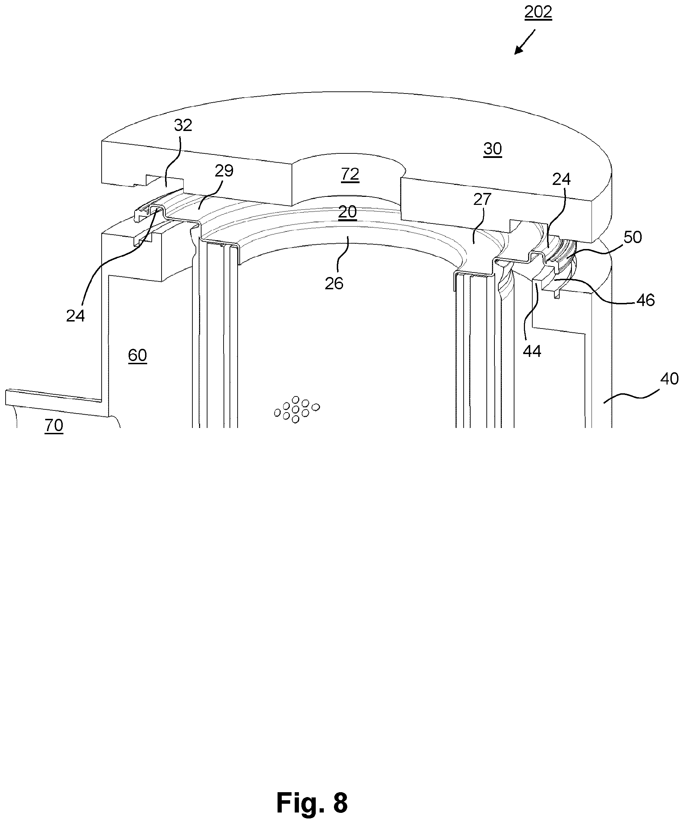

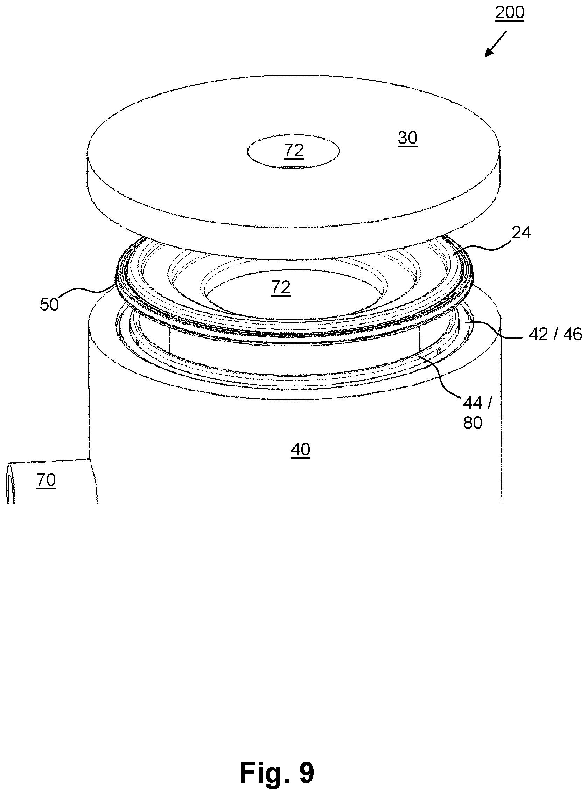

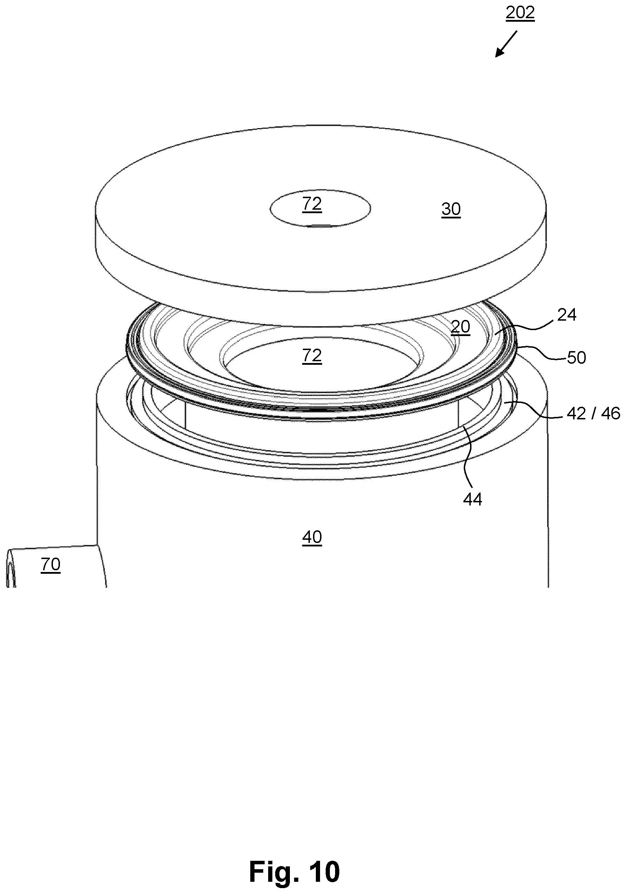

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 7 nachgeordneten Ansprüche verwiesen, andererseits werden weitere Ausgestaltungen, Merkmale und Vorteile der vorliegenden Erfindung nachstehend unter anderem anhand der durch die Figuren 1 bis 10 veranschaulichten zwei Ausführungsbeispiele näher erläutert.

Es zeigt:
- Fig. 1:: in Längsschnittdarstellung ein Ausführungsbeispiel für einen Filtereinsatz gemäß der vorliegenden Erfindung der nach dem Verfahren gemäß der vorliegenden Erfindung bereitgestellt ist;
- Fig. 2:: in perspektivischer Darstellung den Filtereinsatz aus Figur 1;
- Fig. 3:: in Längsschnittdarstellung ein erstes Ausführungsbeispiel für einen Flüssigkeitsabscheider gemäß der vorliegenden Erfindung, wobei der Flüssigkeitsabscheider den Filtereinsatz aus Figur 1 aufweist;
- Fig. 4:: eine Detailansicht des Flanschbereichs des Flüssigkeitsabscheiders aus Figur 3;
- Fig. 5:: in Längsschnittdarstellung ein zweites Ausführungsbeispiel für einen Flüssigkeitsabscheider gemäß der vorliegenden Erfindung, wobei der Flüssigkeitsabscheider den Filtereinsatz aus Figur 1 aufweist;
- Fig. 6:: eine Detailansicht des Flanschbereichs des Flüssigkeitsabscheiders aus Figur 5;
- Fig. 7:: einen Längsschnitt einer Explosionsdarstellung des Flüssigkeitsabscheiders aus Figur 3;
- Fig. 8: einen Längsschnitt einer Explosionsdarstellung des Flüssigkeitsabscheiders aus Figur 5;
- Fig. 9:: in perspektivischer Explosionsdarstellung den Flüssigkeitsabscheider aus Figur 3;
- Fig. 10: in perspektivischer Explosionsdarstellung den Flüssigkeitsabscheider aus Figur 5.

Gleiche oder ähnliche Ausgestaltungen, Elemente oder Merkmale sind in den Fig. 1 bis 10 mit identischen Bezugszeichen versehen.

### Ausführungsform(en) der Erfindung

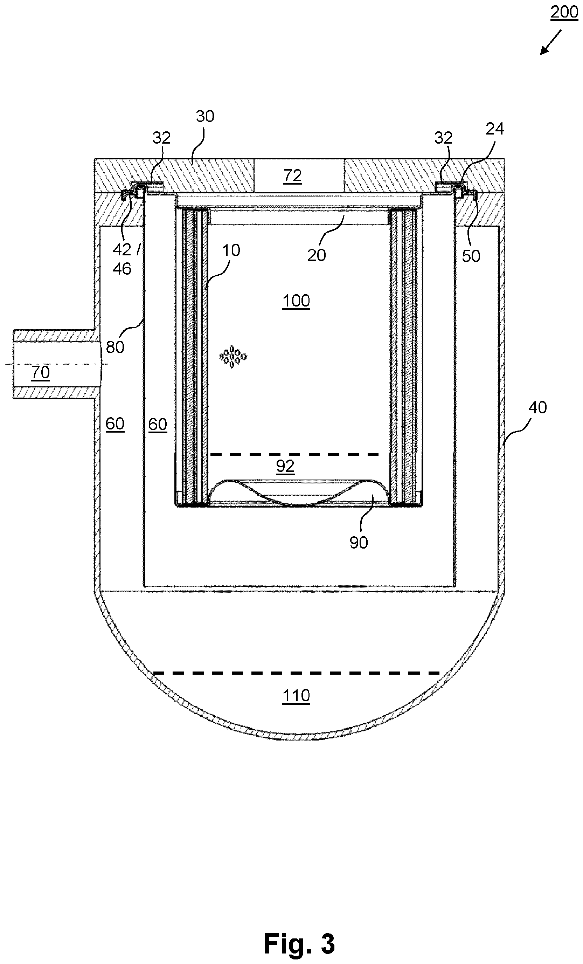

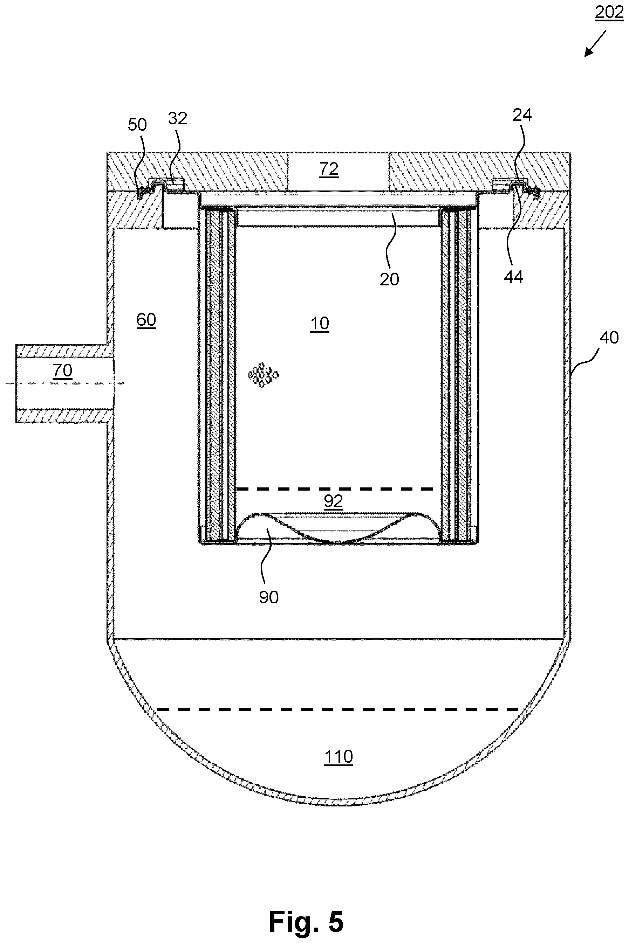

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf den in den Figuren 3, 4, 7 und 9 dargestellten Flüssigkeitsabscheider 200 als auch auf den in den Figuren 5, 6, 8 und 10 dargestellten Flüssigkeitsabscheider 202.

Der in Figur 1 dargestellte Filtereinsatz 100 weist ein hohlzylinderförmiges Abscheideelement 10 auf, das dazu ausgebildet ist, Öl und/oder Ölaerosol mittels des Koaleszenz-Prinzips aus einem Gasstrom abzuscheiden. Das Abscheideelement 10 kann, wie in Figur 1 gezeigt, mehrere, beispielsweise zwei, Filterlagen aufweisen, die aus gleichen oder aus unterschiedlichen Materialien, beispielsweise aus Glasfaser und/oder aus Kunststoff, etwa aus Vlies, gebildet sein können.

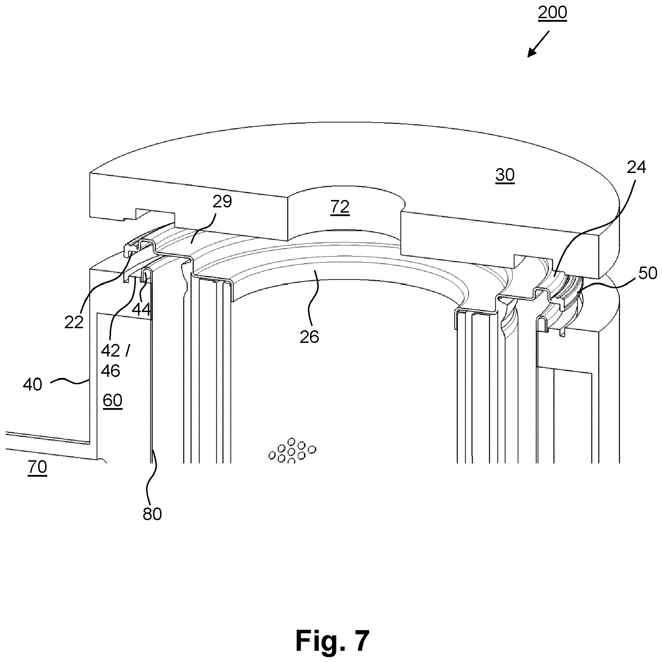

Wie in den Figuren 7 bis 10 gezeigt, kann der Filtereinsatz 100 auswechselbar in ein druckfestes Gehäuse eines Flüssigkeitsabscheiders 200, 202 eingebaut werden. Zum Einbau in das Gehäuse des Flüssigkeitsabscheiders 200, 202 weist der Filtereinsatz 100 einen stirnseitig am Abscheideelement 10 angeordneten Flansch 20 auf, der zwischen einem Deckel 30 und einem zylinderförmigen Körper 40 des Gehäuses des Flüssigkeitsabscheiders 200, 202 verspannbar ist. Der Deckel ist abnehmbar, insbesondere auf den druckfesten Behälter schraubbar.

Das Gehäuse des Flüssigkeitsabscheiders 200, 202 hat einen tangential angeordneten Rohlufteinlass 70, der mit einem Anschlusselement, beispielsweise mit einer Kompressorschraube, verbunden ist. Wenn vorliegend von tangential, radial, axial, koaxial oder umfangsmäßig oder dergleichen die Rede ist, so bezieht sich dies, falls nicht anders erwähnt, auf die Längsachse des Flüssigkeitsabscheiders 200, 202.

Über den Rohlufteinlass 70 gelangt mit Ölaerosol beladene Druckluft in das Gehäuse des Flüssigkeitsabscheiders 200, 202, und durchströmt dann einen zwischen dem Gehäusekörper 40 und dem Abscheideelement 10 angeordneten Ringspalt spiralartig, bevor sie an einem dem Deckel 30 abgewandten unteren Bereich in das Abscheideelement 10 des Filtereinsatzes 100 einströmt und dieses dann von radial Außen nach radial Innen durchströmt.

Die gereinigte Reinluft strömt in axialer Richtung aus dem Gehäuse des Flüssigkeitsabscheiders 200, 202 aus. Zum Abführen der Reinluft weist der Gehäusedeckel 30 einen zentralen Reinluftauslass 72 auf. Der Flansch 20 ist koaxial zum Reinluftauslass 72 des Flüssigkeitsabscheiders 200, 202 angeordnet.

Im Längsschnitt weist der Flansch 20 zwei treppenartig aneinandergereihte Stufen auf. Der sich axial erstreckende Bereich 26 der radial inneren Stufe liegt an der zentralen Ausnehmung des hohlzylinderförmigen Abscheideelements 10 an. Der sich radial erstreckende Bereich 27 der radial inneren Stufe deckt die Stirnseite des Abscheideelements 10 ab. Am sich radial erstreckenden Bereich 29 der äußeren Stufe weist der Flansch 20 mindestens eine zum Festlegen der Position des Flansches 20 auf dem Gehäusekörper 40 ausgebildete Führungsstruktur, nämlich eine Nut 24, auf. Diese Nut 24 zentriert den Filtereinsatz 100 im Gehäusekörper 40.

Am äußeren Rand des sich radial erstreckenden Bereichs 29 der äußeren Stufe ist ein zum Abdichten des Gehäuse 30, 40 gegenüber dem Umgebungsdruck ausgebildetes Dichtelement 50 angeordnet.

Das durch das Abscheideelement 10 des Filtereinsatzes 100 abgeschiedene Öl sammelt sich im Inneren des zylinderförmigen Filtereinsatzes 100 an einer fußseitigen Endscheibe 90, insbesondere in einem radial innerhalb des Filtereinsatzes 100 angeordneten Ölsammelbereich 92 der fußseitigen Endscheibe 90, und kann, beispielsweise über ein Drainagerohrelement (nicht gezeigt), abgeführt und dem Anschlusselement wieder zugeführt werden.

Am Boden des Gehäusekörpers sammelt sich in einem fußseitigen Ölsammelvolumen 110 Öl, das durch eine Vorabscheidung des Gehäuses, insbesondere durch Schwerkraft und durch Zentrifugalkraft bei tangentialer Einströmung der Rohluft, abgeschieden wird. Das sich im Ölsammelvolumen 110 sammelnde vorabgeschiedene Öl kann, beispielsweise über einen zum Auslassen der sich im Gehäuse ansammelnden Flüssigkeit ausgebildeten Flüssigkeitsauslass (nicht gezeigt), ebenfalls dem Anschlusselement wieder zugeführt werden.

Die Nut 24 definiert die Position des Flansches 20 auf dem Abstützbereich 42 und somit auch die Anordnung des Abscheideelements 10 zum Gehäusekörper 40. Um die Position des Flansches 20 auf dem Abstützbereich 42 des Gehäusekörpers 40 festlegen zu können, ist die Nut 24 mindestens eine von der Stirnseite des Abscheideelementes 10 weg ragende axiale Erhebung des Flansches 20, die dazu ausgebildet ist, mindestens eine dem Flüssigkeitsabscheider 200; 202 zugeordnete Gegennut 44 im Wesentlichen passgenau aufzunehmen. Im Querschnitt ist die Nut 24 n-förmig geformt. Wie in den Figuren 3 und 5 gezeigt, ist die Nut 24 radial sowie axial versetzt zum Abscheideelement 10 angeordnet.

Die Gegennut 44 kann, wie in den Figuren 3, 4, 7 und 9 dargestellt, an einem im Gehäusekörper angeordneten Luftleitblech 80 angeordnet sein. Ein derartiges Luftleitblech 80 muss gut zum Filtereinsatz 100 zentriert sein, denn
- die Dimension des Ringspaltes zwischen dem Gehäusekörper 40 und dem Luftleitblech 80 definiert die Beschleunigung der durch diesen Ringspalt strömenden Luft und
- die Dimension des Ringspaltes zwischen dem Luftleitblech 80 und dem Abscheideelement 10 bestimmt, ob die Luft gleichmäßig in das Abscheideelement 10 einströmt.

Ist die Gegennut 44 am Luftleitblech 80 angeordnet, so hilft die Nut 24 beim Einsetzen des Filtereinsatzes 100 in das Gehäuse, das Luftleitblech 80 zum Abscheideelement 10 zu zentrieren.

Ergänzend hierzu oder alternativ hierzu kann die Gegennut 44, wie in den Figuren 5, 6, 8 und 10 dargestellt, am Gehäusekörper 40 angeordnet sein. Dies hat den Vorteil, dass beim Einsetzen des Filtereinsatzes 100 in das Gehäuse die Nut 24 hilft das Abscheideelement 10 zum Gehäusekörper 40 zu zentrieren.

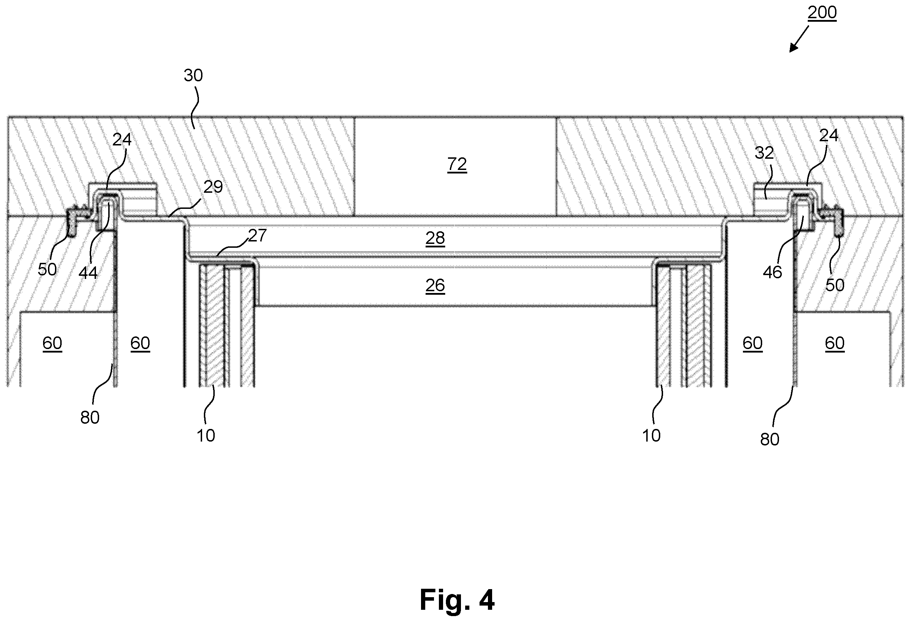

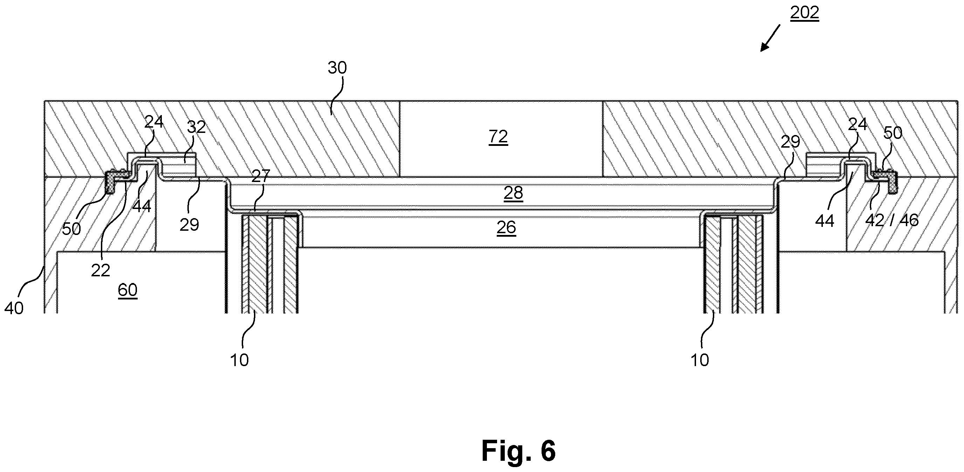

Die Figuren 4 und 6 zeigen eine Detailansicht des Flansches 20 im Gehäuse des Flüssigkeitsabscheiders 200 202. Der Flansch 20, genauer gesagt eine am radial äußeren Rand des Flansches 20 angeordnete Stützfläche 22 des Flansches 20, liegt direkt auf dem Gehäusekörper 40, nämlich auf einem dem Deckel 30 zugewandten oberen Abstützbereich 42 des Gehäusekörpers 40, auf. Auf der Stützfläche 22 liegt ein im Längsschnitt L-förmiger Dichtring 50 auf und auf dem L-förmigen Dichtring 50 liegt der Deckel 30 auf.

Der Deckel 30 hat eine zur Aufnahme der Stützfläche 22 ausgebildete Flanschausnehmung 32. Des Weiteren hat der Abstützbereich 42 eine zur Aufnahme der Stützfläche 22 ausgebildete Flanschausnehmung 46. Die Flanschausnehmung 46 des Gehäusekörpers und die Flanschausnehmung 32 des Deckels 30 bilden gemeinsam eine Dichtkammer 46, 32, in welcher der L-förmige Dichtring 50 derart angeordnet ist, dass die Dichtkammer gegenüber der Umgebung, also gegenüber dem atmosphärischen Druck, abgedichtet ist.

Die Nut 24 hilft bei der Positionierung der Dichtung 50 beim Einsetzen des Filtereinsatzes 100 in das Gehäuse des Flüssigkeitsabscheiders 200; 202, weil, mittels der durch die Nut 24 und die Gegennut 44 bereitgestellte Führung, die Dichtung 50 nach Art einer Wurfpassung in die Dichtkammer 46, 32 einsetzbar ist.

Die Flanschausnehmung 32 des Deckels 30 ist derart ausgebildet, dass die Nut 24 nur dann in der Flanschausnehmung 32 des Deckels 30 anordbar ist, wenn die Nut 24 räumlich passend zur Gegennut 44 angeordnet ist. Dabei entspricht die axiale Erstreckung der Flanschausnehmung 32 des Deckels 30 im Wesentlichen der axialen Erstreckung der Nut 24. Dies bewirkt, dass der Deckel 30 nur dann schließend auf der Gehäuseöffnung anordbar ist, wenn die Gegennut 44 in die Nut 24 eingreift.

In einem an die Dichtkammer 46, 32 angrenzenden radial äußeren Bereich des Gehäuses liegen der Deckel 30 und der Gehäusekörper 40 auf Block auf.

Die in den Figuren 1 bis 10 dargestellten Ausführungsbeispiele der vorliegenden Erfindung haben den Vorteil, dass durch das Zusammenwirken der Nut 24 und der Gegennut 44 beim Einsetzen des Filtereinsatzes 100 in das Gehäuse eine Art Führung bereitgestellt wird, welche bewirkt, dass
- das Abscheideelement zum Gehäusekörper 40 und/oder zum Luftleitblech 80 zentriert wird,
- das Dichtelement 50 in seinem Dichtsitz angeordnet wird und
- der Filtereinsatz 100 nur in ein zu diesem passendes Gehäuse einbaubar ist.

### Bezugszeichenliste

10 zum Abscheiden von Öl und von Ölaerosol aus Luft mittels des Coaleszenzprinzips ausgebildetes Abscheideelement, insbesondere hohlzylinderförmiger Coalescer, beispielsweise aus Glasfaser und/oder aus Kunststoff, etwa aus Vlies
20 Flansch, insbesondere stirnseitige Endscheibe, des Filtereinsatzes 100 zum Lagern des Filtereinsatzes 100 zwischen dem Deckel 30 und dem Gehäusekörper 40 des Flüssigkeitsabscheiders 200, 202
22 Stützfläche des Flansches 20 (vgl. Figur 1)
24 Führungsstruktur oder Differenzierungsstruktur oder Positionierungsstruktur, insbesondere Nut, beispielsweise n-förmige Nut
26 sich axial erstreckender Bereich der radial inneren Stufe des Flansches 20
27 sich radial erstreckender Bereich der radial inneren Stufe des Flansches 20
28 sich axial erstreckender Bereich der radial äußeren Stufe des Flansches 20
29 sich radial erstreckender Bereich der radial äußeren Stufe des Flansches 20
30 Deckel oder Gehäusedeckel, insbesondere Druckbehälterdeckel oder Druckspeicherbehälterdeckel, beisielsweise Gehäusestutzen
32 zur Aufnahme der Stützfläche 22 ausgebildete Flanschausnehmung des Deckels 30
40 Köper des Gehäuses oder Gehäusekörper, insbesondere zylinderförmiger, druckfester Gehäusekörper oder Druckbehälterunterteil oder Druckspeicherbehälterunterteil
42 Abstützbereich, insbesondere Auflagefläche, des Gehäusekörpers 40
44 Gegenstruktur, insbesondere Gegennut
46 zur Aufnahme der Stützfläche 22 ausgebildete Flanschausnehmung des Gehäusekörpers 40
50 Dichtelement, insbesondere im Längsschnitt L-förmiger Dichtring
60 zwischen zylinderförmigem Gehäusekörper 40 und hohlzylinderförmigem Abscheideelement 10 angeordneter Ringspalt
70 Rohlufteinlass zum Einlassen von, von dem Anschlusselement stammender und mit Flüssigkeit beladener, Rohluft in den Gehäusekörper 40
72 Reinluftauslass zum Auslassen der vom Flüssigkeitsabscheider 200, 202 gereinigten Druckluft
80 Luftleitelement, insbesondere Luftleitblech, beispielsweise Shield
90 fußseitige Endscheibe oder fußseitige Endkappe oder Bodenelement zum Abdecken der hohlzylindrischen Fußseite des Filtereinsatzes 100, 102
92 Flüssigkeitssammelbereich, insbesondere Ölsammelbereich, welcher der fußseitigen Endscheibe 90 zugeordnet ist, radial innerhalb des Abscheideelements 10 angeordnet ist und zum Sammeln der vom Abscheideelement 10 abgeschiedenen Flüssigkeit ausgebildet ist (vgl. Figuren 3 und 5)
100 Filtereinsatz
110 Flüssigkeitssammelvolumen, insbesondere Ölsammelvolumen oder Ölsammelraum, zum Sammeln von durch Vorabscheidung, insbesondere durch Schwerkraft und/oder durch Zentrifugalkraft bei tangentialer Einströmung der Rohluft in den Gehäusekörper 40, abgeschiedenen Flüssigkeit (vgl. Figuren 3 und 5)
200 Flüssigkeitsabscheider insbesondere Druckluftentfeuchtevorrichtung, beispielsweise Luftentölelement, erstes Ausführungsbeispiel vgl. Figuren 3, 4, 7 und 9
202 Flüssigkeitsabscheider, insbesondere Druckluftentfeuchtevorrichtung, beispielsweise Luftentölelement, zweites Ausführungsbeispiel vgl. Figuren 5, 6, 8 und 10

## Patentansprüche

1. Filtereinsatz (100) zum Einbau in ein Gehäuse, insbesondere in einen druckfesten Behälter, eines Flüssigkeitsabscheiders (200; 202), aufweisend
- mindestens ein als hohlzylinderförmiger Coalescer ausgebildetes Abscheideelement (10), das zum Abscheiden von Flüssigkeit, insbesondere von Öl und/oder von Ölaerosol, aus einem Gasstrom ausgebildet ist, und
- einen stirnseitig am Abscheideelement (10) angeordneten Flansch (20), der zwischen einem Deckel (30) des Gehäuses und einem zylinderförmigen Körper (40) des Gehäuses auswechselbar anordbar ist, wobei der Flansch (20) an seinem radial äußeren Rand eine Stützfläche (22) aufweist, die dazu ausgebildet ist sich auf einem dem Deckel (30) zugewandten oberen Abstützbereich (42) des Gehäuses abzustützen, **dadurch gekennzeichnet, dass**
der Flansch (20) mindestens eine, zum Festlegen der Position des Flansches (20) auf dem Abstützbereich (42) ausgebildete Führungsstruktur (24) aufweist, wobei die Führungsstruktur (24) mindestens eine von der Stirnseite des Abscheideelementes (10) weg ragende nutartige axiale Erhebung des Flansches (20) ist, die dazu ausgebildet ist, mindestens eine dem Flüssigkeitsabscheider (200; 202) zugeordnete Gegenstruktur (44) im Wesentlichen passgenau aufzunehmen.

2. Filtereinsatz nach Anspruch 1, **dadurch gekennzeichnet, dass** die Führungsstruktur (24) mindestens eine konzentrisch um eine zentrale kreisförmige Ausnehmung des Abscheideelements (10) angeordnete ringförmige Erhebung des Flansches (20) ist.

3. Filtereisatz nach Anspruch 1 oder 2, **dadurch gekennzeichnet, dass** die Führungsstruktur (24) in Gebrauchsstellung des Flansches (20) zum Abstützbereich (42) hin offen ausgebildet ist.

4. Filtereisatz nach mindestens einem der Ansprüche 1 bis 3, **dadurch gekennzeichnet, dass** der Flansch (20) im Längsschnitt treppenartig ausgebildet ist und zwei treppenartig aneinandergereihte Stufen (26, 27, 28, 29) aufweist, wobei
- der sich axial erstreckende Bereich (26) der radial inneren Stufe dazu ausgebildet ist, an der zentralen Ausnehmung des hohlzylinderförmigen Abscheideelements (10) anzuliegen,
- der sich radial erstreckende Bereich (27) der radial inneren Stufe dazu ausgebildet ist, die Stirnseite des Abscheideelements (10) abzudecken,
- die Stützfläche (22) dem sich radial erstreckenden Bereich (29) der äußeren Stufe zugeordnet ist, und
- die Führungsstruktur (24) am sich radial erstreckenden Bereich (29) der äußeren Stufe angeordnet ist.

5. Filtereisatz nach mindestens einem der Ansprüche 1 bis 4, **dadurch gekennzeichnet, dass** die Führungsstruktur (24) die Stützfläche (22) des Flansches (20) in axialer Richtung überragt.

6. Filtereinsatz nach mindestens einem der Ansprüche 1 bis 5, **dadurch gekennzeichnet, dass** an der Stützfläche (22) des Flansches (20) mindestens ein Dichtelement (50), insbesondere mindestens ein L-förmiger Dichtungsring, verliersicher angeordnet ist, wobei das Dichtelement (50) derart an der Stützfläche (22) angeordnet ist, dass es in Gebrauchsstellung des Filtereinsatzes (100) zwischen dem Flansch (20) und dem Gehäuse (30, 40) des Flüssigkeitsabscheiders (200; 202) angeordnet ist und das Gehäuse (30, 40) gegenüber dem Umgebungsdruck abdichtet.

7. Filtereinsatz nach mindestens einem der Ansprüche 1 bis 6, **dadurch gekennzeichnet, dass** die Stützfläche (22) des Flansches (20) derart radial versetzt zum Abscheideelement (10) angeordnet ist, dass das Abscheideelement (10) mit Abstand zum zylindrischen Gehäusekörper (40) anordbar ist, wobei zwischen dem zylinderförmigen Gehäusekörper (40) und dem hohlzylinderförmigen Abscheideelement (10) ein Ringspalt (60) ausgebildet ist, der von der den Gehäusekörper (40) durchströmenden mit Flüssigkeit beladenen Luft spiralartig durchströmbar ist und wobei die Führungsstruktur dazu ausgebildet ist, die Abmessungen des Ringspaltes zu definieren indem sie die Position des Flansches (20) auf dem Abstützbereich (42) festlegt.

8. Flüssigkeitsabscheider (200; 202) aufweisend ein Gehäuse mit einer Gehäuseöffnung, einem zylinderförmigen Gehäusekörper (40) und einem zum Verschließen der Gehäuseöffnung ausgebildeten Deckel (30), **gekennzeichnet durch** einen im Gehäuse angeordneten Filtereinsatz (100) nach mindestens einem der vorhergehenden Ansprüche.

9. Flüssigkeitsabscheider nach Anspruch 8, **dadurch gekennzeichnet, dass**
- die Stützfläche (22) des Flansches (20) im geschlossenen Zustand des Gehäuses zwischen dem Gehäusedeckel (30) und dem Gehäusekörper (40) verspannt ist,
- das Gehäuse mindestens eine zur Aufnahme der Stützfläche (22) ausgebildete Flanschausnehmung (32, 46) aufweist, und
- der Radius des Flansches (20) derart geringer ist als der Radius des Gehäuses, dass an einem an die Flanschausnehmung (32, 46) angrenzenden radial äußeren Bereich der Gehäusedeckel (30) direkt auf dem Gehäusekörper (40) aufliegt.

10. Flüssigkeitsabscheider nach Anspruch 8 oder 9, **gekennzeichnet durch**
- einen tangential am zylinderförmigen Gehäusekörper (40) angeordneten Rohlufteinlass (70), der mit einem flüssigkeitsgeschmierten Anschlusselement eines Druckluftsystems, insbesondere mit einem ölgeschmierten Kompressor, verbindbar ist und dazu ausgebildet ist, von dem Anschlusselement stammende und mit Flüssigkeit beladene Druckluft tangential in den zylinderförmigen Gehäusekörper (40) einzulassen, und
- einen zwischen dem zylinderförmigen Gehäusekörper (40) und dem Abscheideelement (10) des Filtereinsatzes angeordneten Ringspalt (60), wobei der Flüssigkeitsabscheider (200; 202) derart ausgebildet ist, dass die durch den Rohlufteinlass (70) einströmende Luft den Ringspalt (60) spiralartig durchströmt und an einem dem Deckel (30) abgewandten Bereich in das Abscheideelement (10) des Filtereinsatzes (100) einströmt.

11. Flüssigkeitsabscheider nach mindestens einem der Ansprüche 8 bis 10, **gekennzeichnet durch** mindestens ein mit Abstand zum zylinderförmigen Körper (40) des Gehäuses des Flüssigkeitsabscheiders (200; 202) angeordnetes und zum Leiten der in den Gehäusekörper (40) einströmenden Luft in tangentialer Richtung ausgebildetes Luftleitelement (80), wobei die Gegenstruktur (44) des Flüssigkeitsabscheiders (200; 202) an einem in Gebrauchsstellung dem Flansch (20) zugewandten Bereich des Luftleitelements (80) angeordnet ist.

12. Flüssigkeitsabscheider nach mindestens einem der Ansprüche 8 bis 11, **dadurch gekennzeichnet, dass** die Gegenstruktur (44) des Flüssigkeitsabscheiders (200; 202) an einem in Gebrauchsstellung dem Flansch (20) zugewandten Bereich des zylinderförmigen Gehäusekörpers (40) angeordnet ist.

13. Verfahren zum Bereitstellen eines Filtereinsatzes (100) nach mindestens einem der Ansprüche 1 bis 7, zum Einbau in einen Flüssigkeitsabscheider (200; 202) nach mindestens einem der Ansprüche 8 bis 12.

14. Verwendung eines Filtereinsatzes (100) nach mindestens einem der Ansprüche 1 bis 7 in einem Flüssigkeitsabscheider (200; 202) nach mindestens einem der Ansprüche 8 bis 12, zur Entölung von Druckluft, wobei der Flüssigkeitsabscheider (200; 202) einem Druckluftsystem zugeordnet ist, das durch ein ölgeschmiertes Anschlusselement, beispielsweise durch einen Kompressor oder durch eine Vakuumpumpe, gespeist wird.

## Claims

1. Filter insert (100) for installation in a housing, in particular in a pressure-resistant container, of a liquid separator (200; 202), featuring
- at least one separating element (10) designed as a hollow cylindrical coalescer for separating liquid, in particular oil and/or oil aerosol, from a gas flow, and
- a flange (20) disposed at the front face of the separating element (10), said flange being exchangeably disposable between a cover (30) of the housing and a cylindrical body (40) of the housing, wherein the flange (20) features at its radially exterior edge a supporting surface (22) designed to rest on an upper support area (42) of the housing facing the cover (30), **characterized in that**
the flange (20) features at least one guiding structure (24) designed for defining the position of the flange (20) on the support area (42), wherein the guiding structure (24) is at least one groove-like axial protrusion of the flange (20) projecting away from the front face of the separating element (10), said elevation being designed to accommodate at least one counter structure (44) associated with the liquid separator (200; 202) in a substantially precisely fitting manner.

2. Filter insert according to claim 1, **characterized in that** the guiding structure (24) is at least one circular protrusion of the flange (20) disposed concentrically around a central circular recess of the separating element (10).

3. Filter insert according to claim 1 or 2, **characterized in that** the guiding structure (24) is designed to be open towards the support area (42) in the position of use of the flange (20).

4. Filter insert according to at least one of the claims 1 to 3, **characterized in that** the flange (20) is designed in a staircase manner in longitudinal section and features two steps (26, 27, 28, 29) arranged in a staircase manner, wherein
- the axially extending area (26) of the radially inner step is designed to rest against the central recess of the hollow cylindrical separating element (10),
- the radially extending area (27) of the radially inner step is designed to cover the front face of the separating element (10),
- the supporting surface (22) is associated with the radially extending area (29) of the exterior step, and
- the guiding structure (24) is disposed at the radially extending area (29) of the exterior step.

5. Filter insert according to at least one of the claims 1 to 4, **characterized in that** the guiding structure (24) projects beyond the supporting surface (22) of the flange (20) in the axial direction.

6. Filter insert according to at least one of the claims 1 to 5, **characterized in that** at least one sealing element (50), in particular at least one L-shaped sealing ring, is disposed in a captive manner on the supporting surface (22) of the flange (20), wherein the sealing element (50) is disposed on the supporting surface (22) in such a way that, in the position of use of the filter insert (100), it is disposed between the flange (20) and the housing (30, 40) of the liquid separator (200; 202) and seals the housing (30, 40) from the ambient pressure.

7. Filter insert according to at least one of the claims 1 to 6, **characterized in that** the supporting surface (22) of the flange (20) is disposed in such a way radially offset from the separating element (10) that the separating element (10) is disposable at a distance from the cylindrical housing body (40), wherein an annular gap (60) is designed between the cylindrical housing body (40) and the hollow cylindrical separating element (10), said annular gap can be spirally flowed through by the liquid-laden air flowing through the housing body (40), and wherein the guiding structure is designed for defining the dimensions of the annular gap by fixing the position of the flange (20) on the support area (42).

8. Liquid separator (200; 202) featuring a housing having a housing opening, a cylindrical housing body (40) and a cover (30) designed to close the housing opening, **characterized by** a filter insert (100) disposed in the housing according to at least one of the preceding claims.

9. Liquid separator according to claim 8, **characterized in that**
- the supporting surface (22) of the flange (20) is tensioned between the housing cover (30) and the housing body (40) in the closed state of the housing,
- the housing features at least one flange recess (32, 46) designed for accommodating the supporting surface (22), and
- the radius of the flange (20) is smaller than the radius of the housing in such a way that at a radially exterior area adjacent to the flange recess (32, 46) the housing cover (30) lies directly on the housing body (40).

10. Liquid separator according to claim 8 or 9, **characterized by**
- a raw air inlet (70) disposed tangentially on the cylindrical housing body (40) and connectable to a liquid-lubricated connecting element of a compressed air system, in particular to an oil-lubricated compressor, and designed to admit compressed air coming from the connecting element and loaded with liquid tangentially into the cylindrical housing body (40), and
- an annular gap (60) disposed between the cylindrical housing body (40) and the separating element (10) of the filter insert, wherein the liquid separator (200; 202) is designed in such a way that the air flowing in through the raw air inlet (70) spirally flows through the annular gap (60) and flows into the separating element (10) of the filter insert (100) at an area facing away from the cover (30).

11. Liquid separator according to at least one of the claims 8 to 10, **characterized by** at least one air guide element (80) disposed at a distance from the cylindrical body (40) of the housing of the liquid separator (200; 202) and designed to guide the air flowing into the housing body (40) in the tangential direction, wherein the counter structure (44) of the liquid separator (200; 202) is disposed on an area of the air guiding element (80) facing the flange (20) in the position of use.

12. Liquid separator according to at least one of the claims 8 to 11, **characterized in that** the counter structure (44) of the liquid separator (200; 202) is disposed on an area of the cylindrical housing body (40) facing the flange (20) in the position of use.

13. Method for providing a filter insert (100) according to at least one of the claims 1 to 7, for installation in a liquid separator (200; 202) according to at least one of the claims 8 to 12.

14. Use of a filter insert (100) according to at least one of the claims 1 to 7 in a liquid separator (200; 202) according to at least one of the claims 8 to 12, for de-oiling compressed air, wherein the liquid separator (200; 202) is associated with a compressed air system fed by an oil-lubricated connecting element, for example by a compressor or by a vacuum pump.

## Revendications

1. Cartouche filtrante (100) destinée à être montée dans un boîtier, notamment dans un récipient résistant à la pression, d'un séparateur de liquide (200 ; 202), présentant
- au moins un élément de séparation (10) conçu comme un coalesceur en forme de cylindre creux, qui est conçu pour séparer un liquide, notamment de l'huile et/ou un aérosol d'huile, d'un flux de gaz, et
- une bride (20) disposée sur le côté frontal de l'élément de séparation (10), qui peut être disposée de manière interchangeable entre un couvercle (30) du boîtier et un corps cylindrique (40) du boîtier, la bride (20) présentant sur son bord radialement extérieur une surface d'appui (22) conçue pour s'appuyer sur une zone d'appui supérieure (42) du boîtier tournée vers le couvercle (30), **caractérisée en ce que**
la bride (20) présente au moins une structure de guidage (24) conçue pour fixer la position de la bride (20) sur la zone d'appui (42), la structure de guidage (24) étant au moins une saillie axiale de la bride (20) en forme de rainure s'écartant de la face frontale de l'élément de séparation (10), qui est conçue pour recevoir de manière sensiblement bien ajustée au moins une contre-structure (44) associée au séparateur de liquide (200 ; 202).

2. Cartouche filtrante selon la revendication 1, **caractérisée en ce que** la structure de guidage (24) est au moins une saillie annulaire de la bride (20) disposée de manière concentrique autour d'un évidement central circulaire de l'élément de séparation (10).

3. Cartouche filtrante selon la revendication 1 ou 2, **caractérisée en ce que** la structure de guidage (24) est conçue de manière ouverte vers la zone d'appui (42) en position d'utilisation de la bride (20).

4. Cartouche filtrante selon au moins l'une des revendications 1 à 3, **caractérisée en ce que** la bride (20) est réalisée en forme d'escalier en coupe longitudinale et présente deux marches (26, 27, 28, 29) alignées en forme d'escalier,
- la partie s'étendant axialement (26) de la marche radialement intérieure étant conçue pour s'appuyer contre l'évidement central de l'élément de séparation en forme de cylindre creux (10),
- la zone s'étendant radialement (27) de la marche radialement intérieure étant conçue pour recouvrir la face frontale de l'élément de séparation (10),
- la surface d'appui (22) étant associée à la zone s'étendant radialement (29) de la marche extérieure, et
- la structure de guidage (24) étant disposée sur la zone s'étendant radialement (29) de la marche extérieure.

5. Cartouche filtrante selon au moins l'une des revendications 1 à 4, **caractérisée en ce que la** structure de guidage (24) dépasse la surface d'appui (22) de la bride (20) dans la direction axiale.

6. Cartouche filtrante selon au moins l'une des revendications 1 à 5, **caractérisée en ce qu'**au moins un élément d'étanchéité (50), notamment au moins une bague d'étanchéité en forme de L, est disposé sur la surface d'appui (22) de la bride (20) de manière à ne pas être perdu, l'élément d'étanchéité (50) étant disposé sur la surface d'appui (22) de telle sorte qu'en position d'utilisation de la cartouche filtrante (100), il est disposé entre la bride (20) et le boîtier (30, 40) du séparateur de liquide (200 ; 202) et assure l'étanchéité du boîtier (30, 40) par rapport à la pression ambiante.

7. Cartouche filtrante selon au moins l'une des revendications 1 à 6, **caractérisée en ce que** la surface d'appui (22) de la bride (20) est disposée **de telle sorte décalée** radialement par rapport à l'élément de séparation (10) de telle sorte que l'élément de séparation (10) peut être disposé à distance du corps de boîtier cylindrique (40), une fente annulaire (60), qui peut être traversée en forme de spirale par l'air chargé de liquide qui traverse le corps de boîtier (40), étant conçue entre le corps de boîtier cylindrique (40) et l'élément de séparation (10) de forme cylindrique creuse et la structure de guidage étant conçue pour définir les dimensions de la fente annulaire en déterminant la position de la bride (20) sur la zone d'appui (42).

8. Séparateur de liquide (200 ; 202) présentant un boîtier ayant une ouverture de boîtier, un corps de boîtier cylindrique (40) et un couvercle (30) configuré pour fermer l'ouverture de boîtier, **caractérisé par** une cartouche filtrante (100) disposée dans le boîtier selon au moins l'une des revendications précédentes.

9. Séparateur de liquide selon la revendication 8, **caractérisé en ce que**
- la surface d'appui (22) de la bride (20) est serrée entre le couvercle de boîtier (30) et le corps de boîtier (40) lorsque le boîtier est fermé,
- le boîtier présente au moins un évidement de bride (32, 46) conçu pour recevoir la surface d'appui (22), et
- le rayon de la bride (20) est tellement plus petit que le rayon du boîtier qu'au niveau d'une zone radialement extérieure adjacente à l'évidement de bride (32, 46), le couvercle de boîtier (30) repose directement sur le corps de boîtier (40).

10. Séparateur de liquide selon la revendication 8 ou 9, **caractérisé par**
- une entrée d'air brut (70) disposée tangentiellement au corps de boîtier cylindrique (40), qui peut être reliée à un élément de raccordement lubrifié au liquide d'un système d'air comprimé, notamment à un compresseur lubrifié à l'huile, et qui est conçue pour introduire tangentiellement dans le corps de boîtier cylindrique (40) de l'air comprimé provenant de l'élément de raccordement et chargé de liquide, et
- une fente annulaire (60) disposée entre le corps de boîtier cylindrique (40) et l'élément de séparation (10) de la cartouche filtrante, le séparateur de liquide (200 ; 202) étant conçu de telle sorte que l'air entrant par l'entrée d'air brut (70) traverse la fente annulaire (60) en forme de spirale et s'écoule dans l'élément de séparation (10) de la cartouche filtrante (100) au niveau d'une zone opposée au couvercle (30).

11. Séparateur de liquide selon au moins l'une des revendications 8 à 10, **caractérisé par** au moins un élément de guidage d'air (80) disposé à distance du corps cylindrique (40) du boîtier du séparateur de liquide (200 ; 202) et conçu pour guider l'air pénétrant dans le corps du boîtier (40) dans une direction tangentielle, la contre-structure (44) du séparateur de liquide (200 ; 202) étant disposée sur une zone de l'élément de guidage d'air (80) tournée vers la bride (20) en position d'utilisation.

12. Séparateur de liquide selon au moins l'une des revendications 8 à 11, **caractérisé en ce que** la contre-structure (44) du séparateur de liquide (200 ; 202) est disposée sur une zone du corps de boîtier cylindrique (40) qui est tournée vers la bride (20) en position d'utilisation.

13. Procédé de mise à disposition d'une cartouche filtrante (100) selon au moins l'une des revendications 1 à 7, pour l'installation dans un séparateur de liquide (200 ; 202) selon au moins l'une des revendications 8 à 12.

14. Utilisation d'une cartouche filtrante (100) selon au moins l'une des revendications 1 à 7 dans un séparateur de liquide (200 ; 202) selon au moins l'une des revendications 8 à 12, pour le déshuilage d'air comprimé, le séparateur de liquide (200 ; 202) étant associé à un système d'air comprimé qui est alimenté par un élément de raccordement lubrifié à l'huile, par exemple par un compresseur ou par une pompe à vide.
